# EUROPEAN PATENT SPECIFICATION

(11) **EP 2 282 592 B1**
(45) Date of publication and mention of the grant of the patent: **24.08.2016**
(21) Application number: 09290538.9
(22) Date of filing: 03.07.2009
(51) Int. Cl.: H04W 8/08, H04W 60/00, H04W 80/04, H04L 29/08

(54) **Enhancing network-based IP mobility management protocol to provide multihoming support**
Verstärkung des netzbasierten IP-Mobilitätsverwaltungsprotokolls zur Bereitstellung von Multihoming-Unterstützung
Amélioration du protocole de gestion de la mobilité IP sur un réseau afin de fournir un support pour résidences multiples

(43) Date of publication of application: 09.02.2011
(73) Proprietor: ALCATEL LUCENT, 92100 Boulogne-Billancourt (FR)
(72) Inventor: Melia, Telemaco, 91620 Nozay (FR); El Mghazli, Yacine, 91620 Nozay (FR)
(74) Representative: Berthier, Karine

(56) References cited:
- DEVARAPALLI WICHORUS N KANT H LIM STOKE C VOGT ERICSSON V: "Multiple Interface Support with Proxy Mobile IPv6; draft-devarapalli-netext-multi-interface-s upport-00.txt" MULTIPLE INTERFACE SUPPORT WITH PROXY MOBILE IPV6; DRAFT-DEVARAPALLI-NETEXT-MULTI-INTERFACE-S UPPORT-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 3 March 2009 (2009-03-03), XP015060531
- KORHONEN U NILSSON TELIASONERA V DEVARAPALLI AZAIRE J: "Service Selection for Mobile IPv6; rfc5149.txt" IETF STANDARD, INTERNET ENGINEERING TASK FORCE, IETF, CH, 1 February 2008 (2008-02-01), XP015055218 ISSN: 0000-0003
- SOLIMAN ELEVATE TECHNOLOGIES G TSIRTSIS QUALCOMM N MONTAVONT IT/TB G GIARETTA QUALCOMM K KULADINITHI UNIVERSITY OF BREMEN H: "Flow Bindings in Mobile IPv6 and Nemo Basic Support; draft-ietf-mext-flow-binding-02.txt" FLOW BINDINGS IN MOBILE IPV6 AND NEMO BASIC SUPPORT; DRAFT-IETF-MEXT-FLOW-BINDING-02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. mext, no. 2, 28 April 2009 (2009-04-28), XP015062253 [retrieved on 2009-05-01]
- GUNDAVELLI S ET AL: "Proxy Mobile IPv6; rfc5213.txt" PROXY MOBILE IPV6; RFC5213.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 August 2008 (2008-08-01), XP015060252

## Description

The present invention generally relates to mobile communication networks and systems, and to mobility management protocols in such networks and systems.

Detailed descriptions of mobile communication networks and systems, and mobility management protocols in such networks and systems, can be found in the litterature, such as in particular litterature published by standardisation bodies, such as IETF for IP mobility management.

Network - based IP mobility management protocols, such as in particular Proxy Mobile IPv6, PMIPv6 (as specified in RFC 5213) have a number of advantages as compared to host-based IP mobility management such as Mobile IPv6; however currently specified network-based IP mobility management protocols, such as in particular PMIPv6, fail to provide adequate multihoming support.

Document KORHONEN U NILSSON TELIASONERA V DEVARAPALLI AZAIRE J: "Service Selection for Mobile IPv6; rfc5149.txt"IETF STANDARD, INTERNET ENGINEERING TASK FORCE, IETF, CH, 1 February 2008 (2008-02-01), XP015055218 ISSN: 0000-0003 provides technological background.

There is a need to provide such multihoming support, in particular for PMIPv6. More generally, there is a need to improve network-based IP mobility management protocols.

The present invention in particular addresses such needs.

These and other objects are achieved, in one aspect, in an embodiment, by a method for enhancing a network-based IP mobility management protocol to provide multihoming support, said method including providing multihoming support based on multihoming group information, said information identifying a group of interfaces of a Mobile Node MN to be managed by a Local Mobility Anchor LMA on a Mobile Access Gateway MAG demand under a same mobility session.

These and other objects are achieved, in another aspect, by entities, such as in particular Mobile Access Gateway MAG, and Local Mobility Anchor LMA, for performing such method.

These and other objects will become more apparent from the following description taken in conjunction with the accompanying drawings:
- figure 1 schematically illustrates multihomed Mobile Node with PMIPv6 extensions,
- figure 2 schematically illustrates mobility session extended for multihoming,
- figure 3 schematically illustrates initial multihoming setup,
- figure 4 schematically illustrates multihoming renewal,
- figure 5 schematically illustrates multihoming filters modification,
- figure 6 schematically illustrates multihoming interface removal,

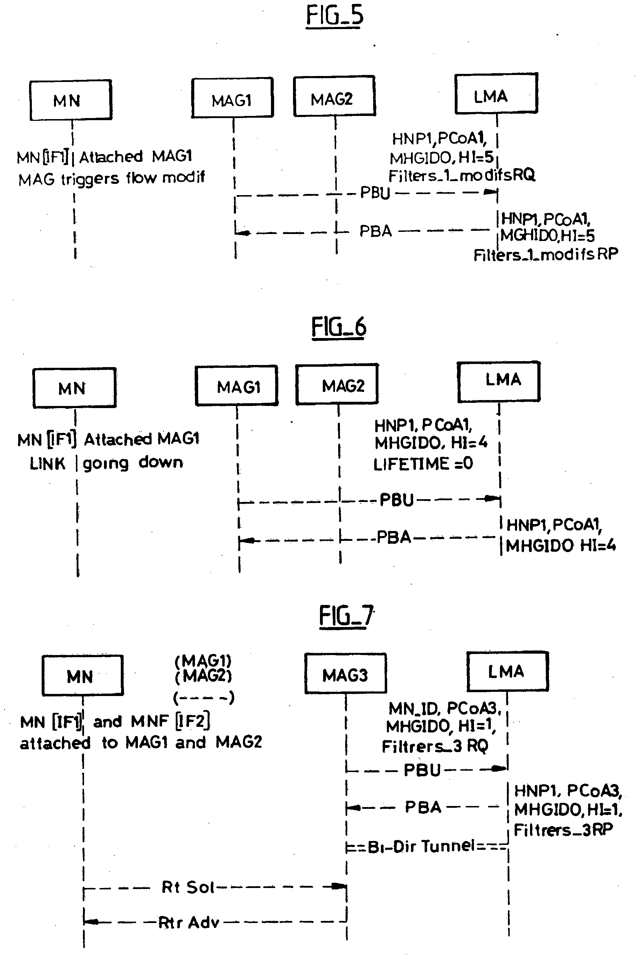

- figure 5 schematically illustrates multihoming filters modification,
- figure 6 schematically illustrates multihoming interface removal,
- figure 7 schematically illustrates multihoming interface addition,

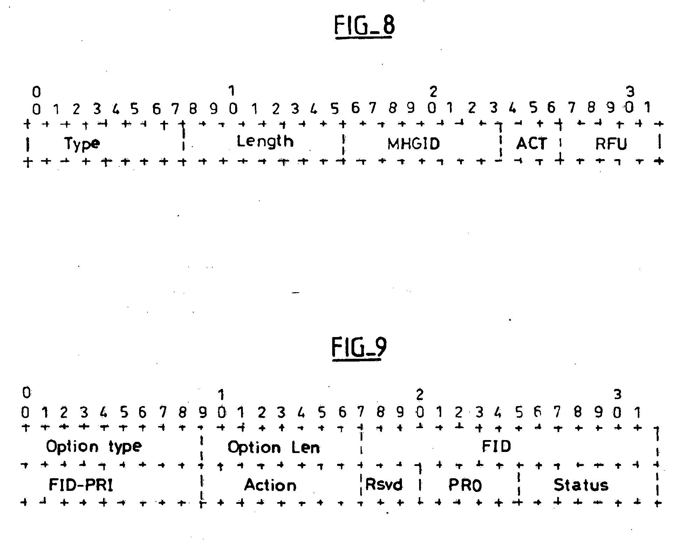

- figure 8 schematically illustrates multihoming option,
- figure 9 schematically illustrates FID Option Action values.

In one aspect, the present invention provides extensions to Proxy Mobile IPv6 in order to support multihomed mobile nodes (MN). These extensions are intended
to permit such mobile nodes to send and receive IP packets on multiple interfaces in a simultaneous and possibly discriminated manner when attached to a PMIPv6 domain. A typical usage of these extensions is to perform downlink flow discrimination through multiple interfaces based on filtering rules (e.g. dedicate one MN interface to VOIP traffic and another MN interface to HTTP traffic). The proposed extensions to PMIPv6 attempt to increment in a backward compatible manner the current PMIPv6 specification.

Proxy Mobile IPv6 (PMIPv6), specified in [RFC5213], provides network
based mobility management to hosts connecting to a PMIPv6 domain. PMIPv6 introduces two functional entities, the Local Mobility Anchor (LMA) and the Mobility Access Gateway (MAG). The MAG is the first layer-three hop detecting MN attachment and providing IP connectivity. The LMA is the entity assigning one or more HNP to the MN and is the topological anchor for all traffic from/to the MN. PMIPv6 allows a MN to connect to the same PMIPv6 domain through multiple interfaces (such MN being called multihomed MN). However in such a case, PMIPv6 requires each
interface to be assigned a distinct IPv6 address and thus prevents
from multihoming capabilities. IETF NETEXT Working Group "Multiple Interface Support with Proxy Mobile IPv6", March 2009, studies how to support multihoming in PMIPv6 and identifies three possible models regarding IPv6 address management:
o unique prefix per interface
o unique address per interface
o shared address across interfaces.

It further describes topics associated with each model, in particular handover behavior and security aspects.

In the following description of an embodiment of the present invention, the shared address across interfaces model will be considered, as an example. In this example, the focus is intended to match the
case where a multihomed MN is known by its Internet peers under the same address while the PMIPv6 domain it is attached to can perform, on its own criteria, packets delivery through the suited MN interface. As a consequence, only a
single Home Network Prefix (HNP) is associated to a multihomed MN in a PMIPv6 domain. Other examples could be envisaged.

In the following description of an embodiment of the present invention, the interface "hanover" or "mobility"
terminology that can be perceived as confusing in the multihoming
context (where MN interfaces are used simultaneously) will not be re-used. Instead, the
concept of multihoming group (a logical set
of interfaces of a MN) is introduced, and the support of elementary operations (addition, modification, removal) on a group entity for a
MN is provided. Such terminology is expected to be more suited to the general
multihoming paradigm. In the following description of an embodiment of the present invention , in an example, a default multihoming group
(id=0) is defined to represent all interfaces of a given MN.

The functional usage of multihoming MN capabilities in a PMIPv6
domain is defined in a flexible and
multi-purpose manner. This allows for various traffic processing in a PMIPv6 domain with multihomed MN such as (not limited to): traffic
blocking, traffic load-balancing or traffic dissemination. To achieve this flexibility, the concept of "filter" is used to denote a unitary criteria that can be managed between a MAG and a LMA in relationship with a MN interface. Unitary filters can be added, deleted and modified on a per multihoming group basis. Flexibility is achieved by allowing an arbitrary filter syntax (or
grammar) as proposed in IETF MEXT Working Group, "Flow bindings in Mobile IPv6 and Nemo Basic Support", April 2009. The filter syntax is a matter of agreement between MAG and LMA entities.

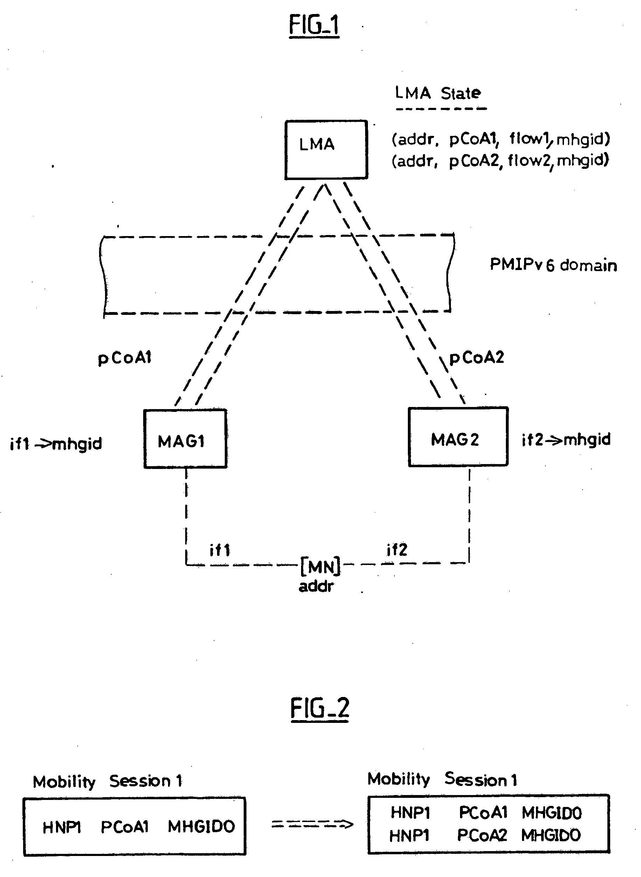

Figure 1 depicts the general principles of PMIPv6
extensions for multihoming support as proposed in an embodiment of the present invention.

When MN activates if1, MAG1selects the default multihoming group and perform proxy registration toward the LMA. MAG1 provides filters (flow1) during registration. LMA accepts proxy registration from MAG1 and allocates MN addr according to the shared address model. Since proxy registration is requesting multihoming support, LMA stores MAG1 filters that come along with delivery to pCoA1.
When MN activates if2, MAG2 selects the default multihoming group and perform proxy registration toward the LMA. MAG2 provides filters (flow2) during registration. LMA accepts proxy registration from MAG2 and allocates MN addr according to the shared address model. LMA stores MAG2 filters that come along with delivery to pCoA2.
Later on, LMA receive IP packets destinated to MN addr. The LMA attempts to match each IP packet against filters (flow1, flow2) stored for the MN addr. When a filter match (flow1 or flow2), the LMA perform the action for the IP packet in the context of the matching flow. In particular if the IP packet is to be delivered, the LMA performs delivery using the pCoA associated to the filter (pCoA1 on flow1 or pCoA2 on flow2).
LMA behavior is extended to allow simultaneous transmission of downlink (DL) packets to the mobile node across multiple interfaces. No assumption is done on how the MN performs uplink (UL) packets transmission. The MN might either use a single interface for UL or select an interface according to existing or new mechanisms such as the ones being defined by the IETF MIF working group.
Both LMA and MAG behaviors are extended to provide enhanced Proxy Binding management for multihomed MN. LMA shall support Binding Control Entries (BCE) of multihomed type. This includes the capability to refer to a multihoming group id (mhgid) and a set of filters in a BCE. This also includes mechanism to allocate a unique HNP per MN when multihoming is used. LMA shall support or delegate the downlink packet processing and delivery according to flow specifications. Both MAG and LMA shall be able to manage flows on a per multihomed MN basis. Downlink flows are created/deleted/modified at LMA level on MAG request using PBU/PBA exchanges.

In an embodiment, it is proposed to extend PMIPv6 to support multiple proxy CoAs per mobility session possibly associated with downlink transmission criteria using the flow concept.

Upon MN attachment the MAG determines if the MN should be provided with multihoming service and, if so, selects the flow configuration that should be put in place for delivery through itself. The MAG can
learn this information, for example through a policy store or using attachment-
specific signalling. If the MAG determines that the MN can
use the multihoming service it forms a PBU as per [RFC5213] and adds
a Multihoming Option (as proposed in an embodiment of the present invention) and possibly
one or several Flow Identifier option(s) as defined in the above -recalled MEXT document. The

Multihoming option aims at identifying (MHGID) and parameterize the
multihoming group to be managed (created/updated/deleted) by the LMA, on MAG
demand. The choice of identification of the multihoming group may follow the following rule:
All PBUs with the same HNP and MHGID values belong to the same mobility session from the LMA perspective.

Figure 2 shows how the mobility session is extended to span the same HNP across multiple interfaces. This updates the text in [RFC5213] where each single interface is managed under a different mobility session. The MHGID, selected by MAG1 (corresponding to PCoA1) upon MN attachment, is stored at the LMA. When the MN attaches to MAG2 (corresponding to PCoA2) MAG2 selects its MHGID value. If both MAG1
and MAG2 MGHID and HNP values match then the LMA adds PCoA2-MHGID0
to the already existing mobility session.

The MAG treats the indication of multihoming as an explicit indication of adding flows to the PBU if any. Such flows can be learned for instance during MN access to the network.

Upon reception of a PBU containing indication for multihoming the LMA should perform a binding cache lookup and append the information to the found BCE. Filters, if present, are extracted from the PBU and processed by the LMA. The result of Filters processing is returned in the PBA by the LMA on an individual basis.

Examples of flow charts for multihoming setup,
renewal, filters modifications and interface removal/addition will now be described.

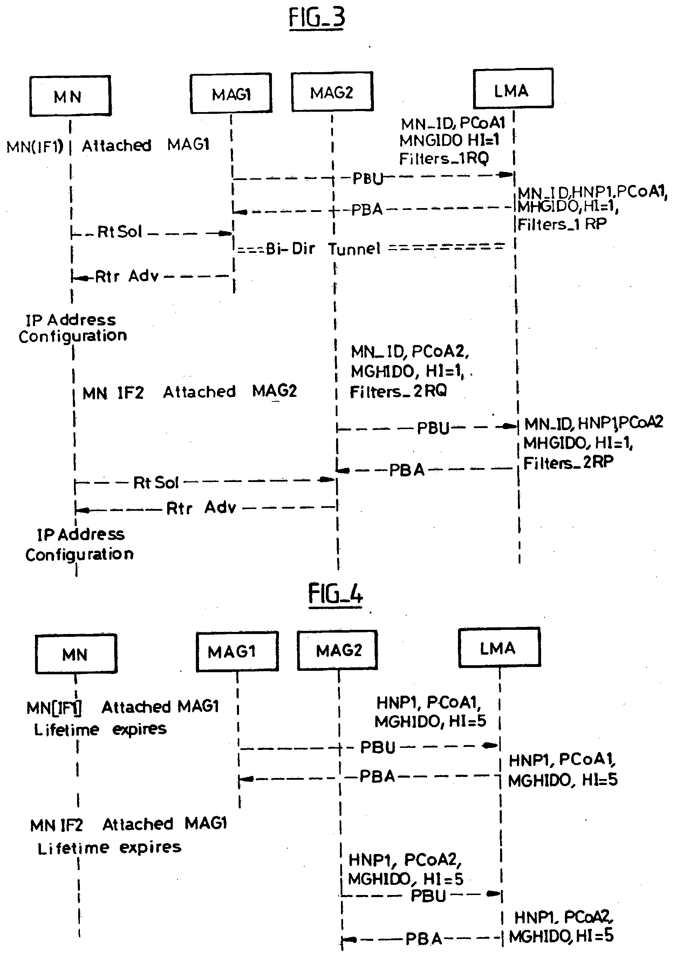

Figure 3 shows Initial multihoming setup.
Figure 3 shows the attachment of IF1 and subsequently the attachment of IF2. IF1 and IF2 belongs to the same multihoming group ID (i.e. the default multihoming group id 0).

Figure 4 shows Multihoming renewal:
Figure 4 shows how binding renewal upon lifetime expiration is done.

Figure 5 shows Multihoming filters modification
Filters can also be modified upon reception of an internal or external MAG trigger Figure 5. From the PMIPv6 point of view, filters modification is carried by binding renewal semantics (HI=5). The target multihoming group is set by the MAG in the multihoming option (MHGID field). This allows MAG to modify at any time the downlink filters it is responsible for.

Figure 6 shows Multihoming interface removal
Figure 6 shows how to remove an interface from a multihoming group managed by a MAG for a given MN. The target multihoming group is set by the MAG in the multihoming option (MHGID field).

Figure 7 shows Multihoming interface addition
Figure 7 addresses the case where the MN adds a third interface to the same multihoming group for a given MN. The target multihoming group is set by the MAG in the multihoming option (MHGID field).

The following extensions to the protocol options as
defined in [RFC5213], as provided in an embodiment of the present invention, will now be described.

Figure 8 shows the Multihoming option.
following fields are provided:
Type
   TBA
   Length
      8-bit unsigned integer indicating the length of the option in octets, excluding the type and length fields. This field MUST be set to 2.
   MHGID
      This 8 bit field identifies the multihoming group the PBU/PBA refer to.
      The value 0 is reserved to the default multihoming group which includes
      all interfaces of a MN. Only value 0 can be supported.
   ACT
      This 3-bit field is used to provide optional action to be performed by LMA upon removal of an interface from a multihoming group. The field shall only be set by the MAG when HI value in PBU is set to 4, otherwise the field shall be set to 0.
      The following bit values are currently defined:
         000: Reserved
         001: Remove filters
         010: Keep filters
   RFU (Reserved for Future Use)
      This 5-bit field is unused for now. The value MUST be initialized to 0 by the sender and MUST be ignored by the receiver.
   The following considerations on the ACT field may apply. If 001 (Remove filters) is set on interface removal, the LMA shall remove all filters currently configured. This might result in downlink traffic disruption. If 010 (Keep filters) is set on interface removal, the LMA shall arrange to re-instantiate filters configured on the removed interface to existing filters (if any) of other interfaces of the multihoming group if any. This allows to avoid downlink traffic disruption. The implementation of this action at LMA level can be specified. However, a filter that has been re-instantiated on a interface should be advertised by the LMA with a specific status of Flow identifier option whenever a MAG perform a filter operation the interface.

Figure 9 shows the Flow Identifier Option
The FID option defined in the above-recalled MEXT document can be used to manage downlink packet delivery across interfaces of
   a multihomed MN. The option might be used by a MAG to create/modify/ delete filter(s) on the LMA for a particular multihoming group of a MN. Upon successful processing and installation of filter(s) at LMA level an individual status (Status field) shall be returned to the
   MAG by the LMA. The LMA should later evaluate packets destinated to a MN through filters installed by MAG(s) that are proxying the MN under the same mobility session. The LMA can perform the action(s) associated to the matching filter(s).
In case, the LMA re-instantiates flows on a multihoming interface group toward a MAG for a given MN, the LMA can perform the following processing:
   ∘ Allocate a unique FID to the re-instantiated filter within the context of existing filters for the multihoming group of the MN toward the target LMA
   ∘ Set the PRO field to a new reserved value (2: flow binding re-instantiated by LMA) of [MEXT] as proposed by the current specification
   ∘ Copy FID-PRI and Action fields from the original filter into the re-instantiated filter
Since no notification mechanism is currently defined between MAG and LMA in [RFC5213], re-instantiated filter(s) will be returned by LMA
only on MAG demand. This might happen when MAG renews PBU or create/
   modify/delete its own filters.
The format of the option is briefly recalled hereafter. In an embodiment, it is proposed to extend the PRO field value in order to add
   the (2: flow binding re-instantiated by LMA) predefined value. The
   full specification of the option can be found in the above-recalled MEXT document

MAG behavior in an embodiment of the present invention will now be described.
The MAG upon MN attachment performs all the steps as per [RFC5213]. In addition to this it performs the following checks.
The MAG learns if the MN is requesting a HNP as part of a new mobility session or if it is requesting to attach a new interface as part of an already existing mobility session. The MAG retrieves the MHGID from e.g. MN's profile as well as filters. The MAG can learn filters for example in an access-specific manner or alternatively via other
   infrastructure support. In any case the MAG encodes the PBU including at least
   the Multihoming option as specified before and possibly one or more FID option(s).
The MAG can modify or delete filters attached to a multihoming group by sending a PBU carrying the filter operation(s) to be performed. It shall analyze individual results according to what is returned by the LMA. In addition, MAG should be prepared to handle filters that has been re-instantiated by LMA when MN has disconnected an interface belonging to the same multihoming group.
When MAG proxying a MN detects the MN has detached the related interface, MAG stops proxying the MN by sending a PBU with lifetime set to 0 and includes the multihoming option that identifies the target multihoming group of the detached interface as well as removal behavior regarding filters. MAG waits for successful PBA to release the MN access.
LMA behavior in an embodiment of the present invention will now be described.
The LMA should be modified in the BCE and conceptual data structures.

BCE modifications:
The LMA binding cache lookup method should be extended to accommodate
   multihoming support. In case the LMA processes the Multihoming Option it SHOULD update existing mobility session as defined in [RFC5213]. In addition to this it performs the following checks.
If the Multihoming option is present in the PBU, the LMA allocates/updates/deletes the mobility session and the multihoming group
   ID it refers to. Flow filters received in the PBU are created/ modified/deleted for the target Multihoming group ID and a result shall be return on an individual filter basis.
In addition, the LMA handles removal of interfaces from multihoming group according to MAG instructions. In particular, if a MAG instructs a LMA to remove an interface from a multihoming group but to keep filters, the LMA should re-instantiate filters on existing interface(s) of the multihoming group according to its own mechanisms.
If a LMA does not support multihoming extension (as a whole) or
   specific multihoming option, as proposed by embodiments of the present document, it
   may return a status code in PBA as defined in [RFC5213]. The later specification might be extended to include multi-homing specific statuses, such as:
   MH_NOT_SUPPORTED_BY_LMA
   MH_FILTERS_REINSTANCIATION_NO_SUPPORTED_BY_LMA

In one aspect, in an embodiment, the present invention provides a method for improvement of a network-based IP mobility management protocol, said protocol running between Mobile Access Gateway MAG and Local Mobility Anchor LMA, said method including providing multihoming support, based on multihoming group information exchanged between MAG and LMA, said information identifying a group of interfaces of a Mobile Node MN to be managed by LMA on MAG demand under a same mobility session.

In addition to a method for improvement of a network-based IP mobility management protocol (examples of which have been decribed above), the present invention also has for its object different entities, such as in particular Mobile Access Gateway MAG and Local mobility Anchor LMA comprising, in an embodiment, means for performing such method.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for enhancing a network-based IP mobility management protocol to provide multihoming support, said method including providing multihoming support based on multihoming group information (MGHID0) exchanged between Mobile Access Gateway, MAG, and Local Mobility Anchor, LMA, said information identifying a group of interfaces (if1, if2) of a Mobile Node MN (MN) to be managed by the Local Mobility Anchor LMA (LMA) on the Mobile Access Gateway MAG (MAG1, MAG2, MAG3) demand under a same mobility session.

2. A method according to claim 1, including a step of:
- upon attachment of a MN, MAG sending to LMA a Proxy Binding Update PBU (PBU) including a Multihoming Option carrying said multihoming group information.

3. A method according to claim 1, including a step of:
- upon attachment of a MN, MAG determining if the MN is provided with multihoming service, and if so, sending to LMA a Proxy binding Update PBU including a Multihoming Option carrying said multihoming group information.

4. A method according to claim 2 or 3, including a step of:
- upon attachment of a MN, MAG sending to LMA a Proxy Binding Update PBU including a Multihoming Option and Flow Identifier Option(s).

5. A method according to any of claims 1 to 4, including a step of:
- upon reception from a MAG of a Proxy Binding Update PBU including multihoming group information, LMA performing a binding cache lookup and appending the information to the found Binding Cache Entry BCE.

6. A method according to any of claims 1 to 5, wherein the choice of identifier MHGID of a multihoming group is such that all Proxy Binding Updates PBUs sent by MAG to LMA with same Home Network Prefix and MHGID values belong to the same mobility session from LMA perspective.

7. A method according to any of claims 1 to 6, wherein a default multihoming group (id=0) is defined to represent all interfaces of a MN.

8. A method according to any of claims 1 to 7, including providing support of elementary operations on a group entity for a MN.

9. A method according to claim 8, wherein said elementary operations include at least one of following operations: initial multihoming setup, multihoming renewal, multihoming filters modification, multihoming interface removal, multihoming interface addition.

10. A Mobile Access Gateway MAG, comprising, for enhancing a network-based IP mobility management protocol to provide multihoming support:
- means for providing multihoming support based on multihoming group information (MGHID0) to be transmitted to a Local Mobility Anchor, LMA, said information identifying a group of interfaces (if1, if2) of a Mobile Node MN (MN) to be managed by the Local Mobility Anchor LMA (LMA) on the Mobile Access Gateway MAG (MAG1, MAG2, MAG3) demand under a same mobility session.

11. A Mobile Access Gateway MAG according to claim 10, comprising:
- means for, upon attachment of a MN, sending to LMA a Proxy Binding Update PBU (PBU) including a Multihoming Option carrying said multihoming group information.

12. A Mobile Access Gateway MAG according to claim 10 or 11, comprising:
- means for, upon attachment of a MN, determining if the MN is provided with multihoming service, and if so, sending to LMA a Proxy binding Update PBU including a Multihoming Option carrying said multihoming group information.

13. A Mobile Access Gateway MAG according to claim 11 or 12, comprising:
- means for, upon attachment of a MN, sending to LMA a Proxy Binding Update PBU including a Multihoming Option and Flow Identifier Option(s).

14. A Mobile Access Gateway MAG according to any of claims 10 to 13, wherein the choice of identifier MHGID of a multihoming group is such that all Proxy Binding Updates PBUs sent by MAG to LMA with same Home Network Prefix and MHGID values belong to the same mobility session from LMA perspective.

15. A Mobile Access Gateway MAG according to any of claims 10 to 14, wherein a default multihoming group (id=0) is defined to represent all interfaces of a MN.

16. A Mobile Access Gateway MAG according to any of claims 10 to 15, including providing support of elementary operations on a group entity for a MN.

17. A Mobile Access Gateway MAG according to claim 16, wherein said elementary operations include at least one of following operations: initial multihoming setup, multihoming renewal, multihoming filters modification, multihoming interface removal, multihoming interface addition.

18. A Local Mobility Anchor LMA, comprising, for enhancing a network-based IP mobility management protocol to provide multihoming support, means for providing multihoming support based on multihoming group information (MGHID0) to be received from a Mobility Acess Gateway, MAG said information identifying a group of interfaces (if1, if2) of a Mobile Node MN (MN) to be managed by the Local Mobility Anchor LMA (LMA) on the mobile Access Gateway MAG (MAG1, MAG2, MAG3) demand under a same mobility session.

19. A Local Mobility Anchor LMA according to claim 18, comprising:
- means for, upon reception from a MAG of a Proxy Binding Update PBU including multihoming group information, performing a binding cache lookup and appending the information to the found Binding Cache Entry BCE.

20. A Local Mobility Anchor LMA according to claim 18 or 19, wherein the choice of identifier MHGID of a multihoming group is such that all Proxy Binding Updates PBUs sent by MAG to LMA with same Home Network Prefix and MHGID values belong to the same mobility session from LMA perspective.

21. A Local Mobility Anchor LMA according to any of claims 18 to 20, wherein a default multihoming group (id=0) is defined to represent all interfaces of a MN.

22. A Local Mobility Anchor LMA according to any of claims 18 to 21, including providing support of elementary operations on a group entity for a MN.

23. A Local Mobility Anchor LMA according to claim 22, wherein said elementary operations include at least one of following operations: initial multihoming setup, multihoming renewal, multihoming filters modification, multihoming interface removal, multihoming interface addition.

## Patentansprüche

1. Verfahren zum Verbessern eines netzwerkbasierten IP Mobility Management-Protokolls zur Bereitstellung einer Multihoming-Unterstützung, wobei besagtes Verfahren das Bereitstellen einer Multihoming-Unterstützung basierend auf Multihoming-Gruppen-Informationen (MGHID0) umfasst, die zwischen einem Mobile Access Gateway, MAG, und einem Local Mobility Anchor, LMA, ausgetauscht werden, wobei besagte Informationen eine Gruppe von Schnittstellen (if1, if2) eines mobilen Knotens MN (MN) identifizieren, der von dem Local Mobility Anchor LMA (LMA) auf Anforderung des Mobile Access Gateway MAG (MAG1, MAG2, MAG3) unter einer gleichen Mobilitätssitzung zu verwalten ist.

2. Verfahren nach Anspruch 1, umfassend folgenden Schritt:
- nach Anhängen eines MN, Senden eines Proxy Binding Updates PBU (PBU), umfassend eine Multihoming-Option, welche die besagten Multihoming-Gruppen-Informationen trägt, durch MAG an LMA.

3. Verfahren nach Anspruch 1, umfassend folgenden Schritt:
- nach Anhängen eines MN, Bestimmen durch MAG, ob der MN mit einem Multihoming-Dienst ausgestattet ist, und falls ja, Senden eines Proxy Binding Updates PBU, umfassend eine Multihoming-Option, welche die besagten Multihoming-Gruppen-Informationen trägt, an LMA.

4. Verfahren nach Anspruch 2 oder 3, umfassend folgenden Schritt:
- nach Anhängen eines MN, Senden eines Proxy Binding Updates PBU, umfassend eine Multihoming-Option und Flussidentifikator-Option(en), durch MAG an LMA.

5. Verfahren nach einem beliebigen der Ansprüche 1 bis 4, umfassend folgenden Schritt:
- nach Empfang eines Proxy Binding Updates PBU, umfassend Multihoming-Gruppen-Informationen, von einem MAG, Durchführen eines Binding Cache Lookups und Anhängen der Informationen an den gefundenen Binding Cache Eintrag BCE durch den LMA.

6. Verfahren nach einem beliebigen der Ansprüche 1 bis 5, wobei die Wahl des Identifikators MHGID einer Multihoming-Gruppe so ist, dass alle Proxy Binding Updates PBUs, die von MAG an LMA mit dem gleichen Heimnetzwerk-Präfix und den gleichen MHGID-Werten gesendet werden, zur gleichen Mobilitätssitzung aus LMA-Perspektive gehören.

7. Verfahren nach einem beliebigen der Ansprüche 1 bis 6, wobei eine Standard-Multihoming-Gruppe (id=0) definiert wird, um alle Schnittstellen eines MN darzustellen.

8. Verfahren nach einem beliebigen der Ansprüche 1 bis 7, umfassend das Bereitstellen einer Unterstützung von elementaren Vorgängen an einer Gruppenentität für einen MN.

9. Verfahren nach Anspruch 8, wobei besagte elementare Vorgänge mindestens einen der folgenden Vorgänge umfassen: anfängliche Multihoming-Einrichtung, Multihoming-Erneuerung, Multihoming-Filteränderung, Multihoming-Schnittstellenentfernung, Multihoming-Schnittstellenhinzufügung.

10. Mobile Access Gateway MAG, umfassend zum Verbessern eines netzwerkbasierten IP Mobility Management-Protokolls zur Bereitstellung einer Multihoming-Unterstützung:
- Mittel zum Bereitstellen einer Multihoming-Unterstützung basierend auf Multihoming-Gruppen-Informationen (MGHID0), die an einen Local Mobility Anchor, LMA, zu senden sind, wobei besagte Informationen eine Gruppe von Schnittstellen (if1, if2) eines mobilen Knotens MN (MN) identifizieren, der von dem Local Mobility Anchor LMA (LMA) auf Anforderung des Mobile Access Gateway MAG (MAG1, MAG2, MAG3) unter einer gleichen Mobilitätssitzung zu verwalten ist.

11. Mobile Access Gateway MAG nach Anspruch 10, umfassend:
- Mittel zum Senden, nach Anhängen eines MN, eines Proxy Binding Updates PBU (PBU), umfassend eine Multihoming-Option, welche die besagten Multihoming-Gruppen-Informationen trägt, an LMA.

12. Mobile Access Gateway MAG nach Anspruch 10 oder 11, umfassend:
- Mittel zum Bestimmen, nach Anhängen eines MN, ob der MN mit einem Multihoming-Dienst ausgestattet ist, und falls ja, Senden eines Proxy Binding Updates PBU, umfassend eine Multihoming-Option, welche die besagten Multihoming-Gruppen-Informationen trägt, an LMA.

13. Mobile Access Gateway MAG nach Anspruch 11 oder 12, umfassend:
- Mittel zum Senden, nach Anhängen eines MN, eines Proxy Binding Updates PBU, umfassend eine Multihoming-Option und Flussidentifikator-Option(en), an LMA.

14. Mobile Access Gateway MAG nach einem beliebigen der Ansprüche 10 bis 13, wobei die Wahl des Identifikators MHGID einer Multihoming-Gruppe so ist, dass alle Proxy Binding Updates PBUs, die von MAG an LMA mit dem gleichen Heimnetzwerk-Präfix und den gleichen MHGID-Werten gesendet werden, zur gleichen Mobilitätssitzung aus LMA-Perspektive gehören.

15. Mobile Access Gateway MAG nach einem beliebigen der Ansprüche 10 bis 14, wobei eine Standard-Multihoming-Gruppe (id=0) definiert wird, um alle Schnittstellen eines MN darzustellen.

16. Mobile Access Gateway MAG nach einem beliebigen der Ansprüche 10 bis 15, umfassend das Bereitstellen einer Unterstützung von elementaren Vorgängen an einer Gruppenentität für einen MN.

17. Mobile Access Gateway MAG nach Anspruch 16, wobei besagte elementare Vorgänge mindestens einen der folgenden Vorgänge umfassen:
anfängliche Multihoming-Einrichtung, Multihoming-Erneuerung, Multihoming-Filteränderung, Multihoming-Schnittstellenentfernung, Multihoming-Schnittstellenhinzufügung.

18. Local Mobility Anchor LMA, umfassend, zum Verbessern eines netzwerkbasierten IP Mobility Management-Protokolls zur Bereitstellung einer Multihoming-Unterstützung, Mittel zum Bereitstellen einer Multihoming-Unterstützung basierend auf Multihoming-Gruppen-Informationen (MGHID0), die von einem Mobility Access Gateway, MAG, zu empfangen sind, wobei besagte Informationen eine Gruppe von Schnittstellen (if1, if2) eines mobilen Knotens MN (MN) identifizieren, der von dem Local Mobility Anchor LMA (LMA) auf Anforderung des Mobile Access Gateway MAG (MAG1, MAG2, MAG3) unter einer gleichen Mobilitätssitzung zu verwalten ist.

19. Local Mobility Anchor LMA nach Anspruch 18, umfassend:
- Mittel zum Durchführen, nach Empfang eines Proxy Binding Updates PBU, umfassend Multihoming-Gruppen-Informationen, von einem MAG, eines Binding Cache Lookups und Anhängen der Informationen an den gefundenen Binding Cache Eintrag BCE.

20. Local Mobility Anchor LMA nach Anspruch 18 oder 19, wobei die Wahl des Identifikators MHGID einer Multihoming-Gruppe so ist, dass alle Proxy Binding Updates PBUs, die von MAG an LMA mit dem gleichen Heimnetzwerk-Präfix und den gleichen MHGID-Werten gesendet werden, zur gleichen Mobilitätssitzung aus LMA-Perspektive gehören.

21. Local Mobility Anchor LMA nach einem beliebigen der Ansprüche 18 bis 20, wobei eine Standard-Multihoming-Gruppe (id=0) definiert wird, um alle Schnittstellen eines MN darzustellen.

22. Local Mobility Anchor LMA nach einem beliebigen der Ansprüche 18 bis 21, umfassend das Bereitstellen einer Unterstützung von elementaren Vorgängen an einer Gruppenentität für einen MN.

23. Local Mobility Anchor LMA nach Anspruch 22, wobei besagte elementare Vorgänge mindestens einen der folgenden Vorgänge umfassen:
anfängliche Multihoming-Einrichtung, Multihoming-Erneuerung, Multihoming-Filteränderung, Multihoming-Schnittstellenentfernung, Multihoming-Schnittstellenhinzufügung.

## Revendications

1. Procédé pour améliorer un protocole de gestion de la mobilité IP basé sur un réseau afin de fournir un support multihoming, ledit procédé consistant à fournir un support multihoming en fonction d'informations de groupe multihoming (MGHID0) échangées entre une passerelle d'accès mobile, MAG, Mobile Access Gateway, et un ancrage de mobilité locale, LMA, Local Mobility Anchor, lesdites informations identifiant un groupe d'interfaces (if1, if2) du noeud mobile MN (MN) devant être géré par l'ancrage de mobilité locale LMA (LMA) à la demande de la passerelle d'accès mobile MAG (MAG1, MAG2, MAG3) dans une même session de mobilité.

2. Procédé selon la revendication 1, comprenant l'étape suivante:
- lors de l'attachement d'un MN, la MAG envoie au LMA une mise à jour de liaison à un serveur mandataire (PBU), Proxy Binding Update, comprenant une option multihoming contenant lesdites informations de groupe multihoming.

3. Procédé selon la revendication 1, comprenant l'étape suivante:
- lors de l'attachement d'un MN, la MAG détermine si le MN dispose d'un service multihoming, et si tel est le cas, envoie au LMA une mise à jour de liaison à un serveur mandataire PBU comprenant une option multihoming contenant lesdites informations de groupe multihoming.

4. Procédé selon la revendication 2 ou 3, comprenant l'étape suivante :
- lors de l'attachement d'un MN, la MAG envoie au LMA une mise à jour de liaison à un serveur mandataire PBU comprenant une option multihoming et une/des option(s) d'identifiant de flux.

5. Procédé selon l'une quelconque des revendications 1 à 4, comprenant l'étape suivante :
- lors de la réception à partir d'une MAG d'une mise à jour de liaison à un serveur mandataire PBU comprenant des informations de groupe multihoming, le LMA effectue une recherche de cache de liaison et ajoute les informations à l'entrée de cache de liaison (BCE), Binding Cache Entry, trouvée.

6. Procédé selon l'une quelconque des revendications 1 à 5, dans lequel le choix de l'identifiant MHGID d'un groupe multihoming est tel que toutes les mises à jour de liaison à un serveur mandataire PBU envoyées par la MAG au LMA avec les mêmes valeurs de préfixe de réseau domestique et MHGID appartiennent à la même session de mobilité du point de vue du LMA.

7. Procédé selon l'une quelconque des revendications 1 à 6, dans lequel un groupe multihoming par défaut (id=0) est défini pour représenter toutes les interfaces d'un MN.

8. Procédé selon l'une quelconque des revendications 1 à 7, comprenant la fourniture d'un support d'opérations élémentaires sur une entité de groupe pour un MN.

9. Procédé selon la revendication 8, dans lequel lesdites opérations élémentaires comprennent au moins une des opérations suivantes : configuration multihoming initiale, renouvellement multihoming, modification de filtres multihoming, suppression d'interface multihoming, ajout multihoming.

10. Passerelle d'accès mobile MAG, comprenant, pour améliorer un protocole de gestion de la mobilité IP basé sur un réseau afin de fournir un support multihoming :
- des moyens pour fournir un support multihoming sur la base d'informations de groupe multihoming (MGHID0), devant être transmises à un ancrage de mobilité locale, LMA, lesdites informations identifiant un groupe d'interfaces (if1, if2) d'un noeud mobile (MN) devant être géré par l'ancrage de mobilité locale (LMA) à la demande de la passerelle d'accès mobile MAG (MAG1, MAG2, MAG3) dans une même session de mobilité.

11. Passerelle d'accès mobile MAG selon la revendication 10, comprenant :
- des moyens pour envoyer au LMA, lors de l'attachement d'un MN, une mise à jour de liaison à un serveur mandataire (PBU) comprenant une option multihoming contenant lesdites informations de groupe multihoming.

12. Passerelle d'accès mobile MAG selon la revendication 10 ou 11, comprenant :
- des moyens pour déterminer, lors de l'attachement d'un MN, si le MN dispose d'un service multihoming et, si tel est le cas, pour envoyer une mise à jour de liaison à un serveur mandataire PBU comprenant une option multihoming contenant lesdites informations de groupe multihoming.

13. Passerelle d'accès mobile MAG selon la revendication 11 ou 12, comprenant :
- des moyens pour envoyer au LMA, lors de l'attachement d'un MN, une mise à jour de liaison à un serveur mandataire PBU comprenant une option multihoming et une/des option(s) d'identifiant de flux.

14. Passerelle d'accès mobile MAG selon l'une quelconque des revendications 10 à 13, dans laquelle le choix de l'identifiant MHGID d'un groupe multihoming est tel que toutes les mises à jour de liaison à un serveur mandataire PBU envoyées par la MAG au LMA avec les mêmes valeurs de préfixe de réseau domestique et MHGID appartiennent à la même session de mobilité du point de vue du LMA.

15. Passerelle d'accès mobile MAG selon l'une quelconque des revendications 10 à 14, dans laquelle un groupe multihoming par défaut (id=0) est défini pour représenter toutes les interfaces d'un MN.

16. Passerelle d'accès mobile MAG selon l'une quelconque des revendications 10 à 15, comprenant la fourniture d'un support d'opérations élémentaires sur une entité de groupe pour un MN.

17. Passerelle d'accès mobile MAG selon la revendication 16, dans laquelle lesdites opérations élémentaires comprennent au moins une des opérations suivantes : configuration multihoming initiale, renouvellement multihoming, modification de filtres multihoming, suppression d'interface multihoming, ajout d'interface multihoming.

18. Ancrage de mobilité locale LMA, comprenant, pour améliorer un protocole de gestion de la mobilité IP basé sur un réseau afin de fournir un support multihoming, des moyens pour fournir un support multihoming en fonction d'informations de groupe multihoming (MGHID0) devant être reçues à partir d'une passerelle d'accès mobile, MAG, lesdites informations identifiant un groupe d'interfaces (if1, if2) d'un noeud mobile MN (MN) devant être géré par l'ancrage de mobilité locale (LMA) à la demande de la passerelle d'accès mobile MAG (MAG1, MAG2, MAG3) dans une même session de mobilité.

19. Ancrage de mobilité locale LMA selon la revendication 18, comprenant :
- des moyens pour effectuer une recherche de cache de liaison et ajouter les informations à l'entrée de cache de liaison BCE trouvée, lors de la réception à partir d'une MAG d'une mise à jour de liaison à un serveur mandataire PBU comprenant des informations de groupe multihoming.

20. Ancrage de mobilité locale LMA, selon la revendication 18 à 19, dans laquelle le choix de l'identifiant MHGID d'un groupe multihoming est tel que toutes les mises à jour de liaison à un serveur mandataire PBU envoyées par la MAG au LMA avec les mêmes valeurs de préfixe de réseau domestique et MHGID appartiennent à la même session de mobilité du point de vue du LMA.

21. Ancrage de mobilité locale LMA selon l'une quelconque des revendications 18 à 20, dans laquelle un groupe multihoming par défaut (id=0) est défini pour représenter toutes les interfaces d'un MN.

22. Ancrage de mobilité locale LMA selon l'une quelconque des revendications 18 à 21, comprenant la fourniture d'un support d'opérations élémentaires sur une entité de groupe pour un MN.

23. Ancrage de mobilité locale LMA selon la revendication 22, dans laquelle lesdites opérations élémentaires comprennent au moins une des opérations suivantes : configuration multihoming initiale, renouvellement multihoming, modification de filtres multihoming, suppression d'interface multihoming, ajout d'interface multihoming.
